# EUROPEAN PATENT SPECIFICATION

(11) **EP 1 877 910 B1**
(45) Date of publication and mention of the grant of the patent: **23.02.2011**
(21) Application number: 06726884.7
(22) Date of filing: 26.04.2006
(51) Int. Cl.: G06F 13/38

(54) **DELEGATING UNIVERSAL SERIAL BUS FUNCTIONALITY**
DELEGIERUNG VON USB-FUNKTIONALITÄT
DELEGATION DE FONCTIONNALITE USB

(30) Priority: 27.04.2005 GB 0508576
(43) Date of publication of application: 16.01.2008
(73) Proprietor: Nokia Corporation, 02150 Espoo (FI)
(72) Inventor: SELF, Dale, London SE1 8HP (GB)
(74) Representative: Khan, Mohammed Saiful Azam
(86) International application number: PCT/GB2006/001495
(87) International publication number: WO 2006/114598

(56) References cited:
- EP-A- 1 248 179
- US-B1- 6 185 641
- DEVICEWALL: "Managing the threat of portable storage devices" [Online] 2005, , XP002388825 Retrieved from the Internet: URL:http://www.devicewall.de/downloads/DW_ brochure.pdf> [retrieved on 2006-07-04] the whole document

## Description

The present invention relates to a method for enabling the delegation of Universal Serial Bus (USB) functionality in order to implement USB On-The-Go (OTG).

USB came into widespread use during the 1990s as a method of easily connecting peripheral devices to a personal computer (PC). Previous methods of connecting such devices either required physically opening the PC case and physically inserting bespoke interface cards, or used the relatively slow external serial or parallel ports on the PC. All these resources were relatively scarce because they were strictly limited in number. Furthermore, in general, they all required some technical expertise to configure.

USB is, in essence, a form of small local wired network, in which the PC acts as a host which is able to communicate with and control any connected peripherals. It is both fast and expandable, and provided the 'USB network' knows about the generic type of a peripheral device that is plugged into a USB port on the PC, it will auto detect and configure itself to make use of the device.

However, devices which now make use of USB for their links to PCs are not restricted to traditional peripherals such as keyboards, mice, speakers, printers, scanners and modems, but also now encompass newer mobile computing devices with considerable integral computing power. Such devices include digital cameras, music players and mobile telephones.

Because USB was originally conceived of as a PC centric arrangement in which the computer always acted as a central host controlling all of its peripherals, it was not originally possible for advanced USB peripherals to communicate with each other directly, in the absence of the PC. Hence, all communications have to be routed through the central host PC. However, there are clearly situations where such 'more intelligent' peripheral devices have a reasonable need to communicate independently with other USB peripheral devices. It is not unreasonable, for example, to expect digital cameras to be able to connect and communicate directly to printers and for music players to be able to connect and communicate directly to speakers, while advanced modem mobile telephones, would benefit not just from direct access to output devices such as printers, speakers and displays, but also from a range of USB input devices, such as microphones, keyboards and scanners. And, almost all advanced mobile computing devices and not just PCs may be regarded as being able to benefit from access to modern USB storage devices, such as pen drives.

The development of such highly intelligent mobile peripherals was not envisaged in the original USB specification, which neither permitted more lightweight implementations of the host USB functionality nor envisaged devices being able to switch between functioning as hosts and functioning as peripherals.

EP1248179 discloses a peripheral device connecting to a USB bus, wherein the host controller upon receiving a descriptor from the peripheral controls the grant of access to the bus based on the descriptor, but does not grant control over any portion of the bus.

To remedy this deficiency, and allow mobile computing devices to control USB peripherals, the USB Implementers Forum, Inc. (*USB-IF*) has developed a supplementary specification for USB, which is referred to as USB On-the-Go (*USB-OTG*). This specification enables advanced mobile computing devices to implement an additional capability to function as a host with respect to selected other USB peripherals, and also specifies a set of mechanical and electrical characteristics (such as smaller USB connectors and reduced bus voltages) which are more suitable to the form factor and limited battery life of mobile devices. Further information can be found on the USB-IF web site at http://www.usb.org/developers/onthego/.

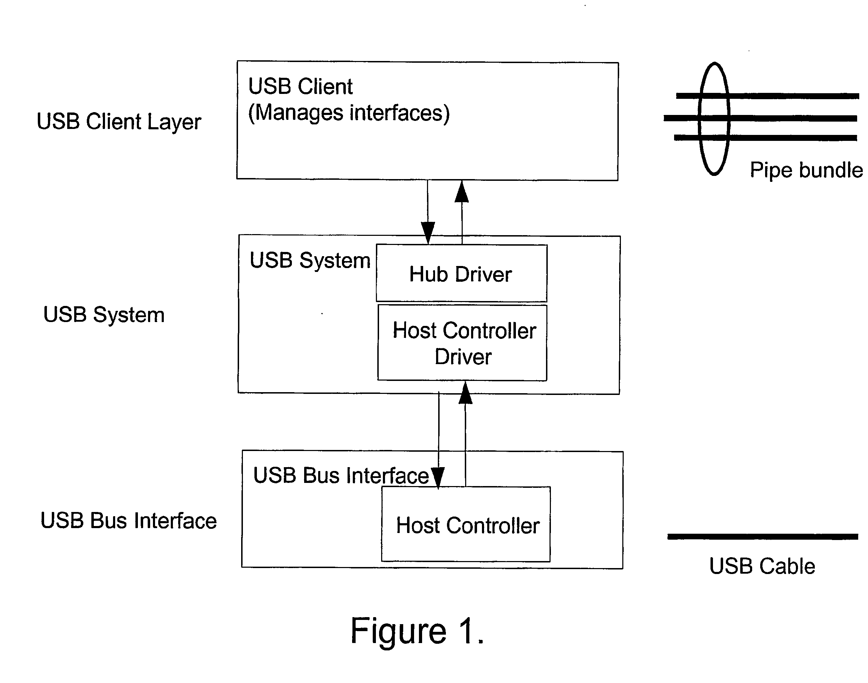

The full specification for USB-OTG can be seen at hftp://www.usb.org/developers/docs/usb 20.zip. Some of the features of this specification will now be described briefly with reference to figure 1.

The requirements for a mobile computing device to be able to support USB-OTG are twofold:
- the ability to act as a USB Host, and control traffic on the bus
- the ability to act as a USB Hub, and detect and identify devices that are attached to the bus or detached from it.

Figure 1 shows schematically the layers and functional blocks which the USB-OTG specification requires of any USB Host implementation which, as can be seen from the figure, is configured as three blocks; a USB Client, a USB System, and a USB Bus Interface. The interfaces between these blocks have been defined to varying degrees within the specification referred to above.

The interface used between the Host Controller Driver of the USB System and the Host Controller of the USB Bus Interface is known as the Host Controller Interface (HCl). Generally, the HCl will follow one of the Open, Universal or Extended Host Controller Interface specifications (known respectively as OHCl, UHCl or EHCl).

The interface between the Host Controller Driver and USB Hub Driver within the USB System functional block is an optional interface known as the Host Controller Driver Interface (HCDI). This interface is described in the specification as being an operating system (OS) specific interface which is used to abstract away the differences between the HCl specifications for the USB Driver.

The interface between the USB Driver and the USB Client is known as the USB Driver Interface (USBDI). The USBDI abstracts USB services to the level of interface and device configuration management, and transfers. The USBDI is the interface through which all USB host software communicates with the USB.

The USBDI is a prime focus of this invention.

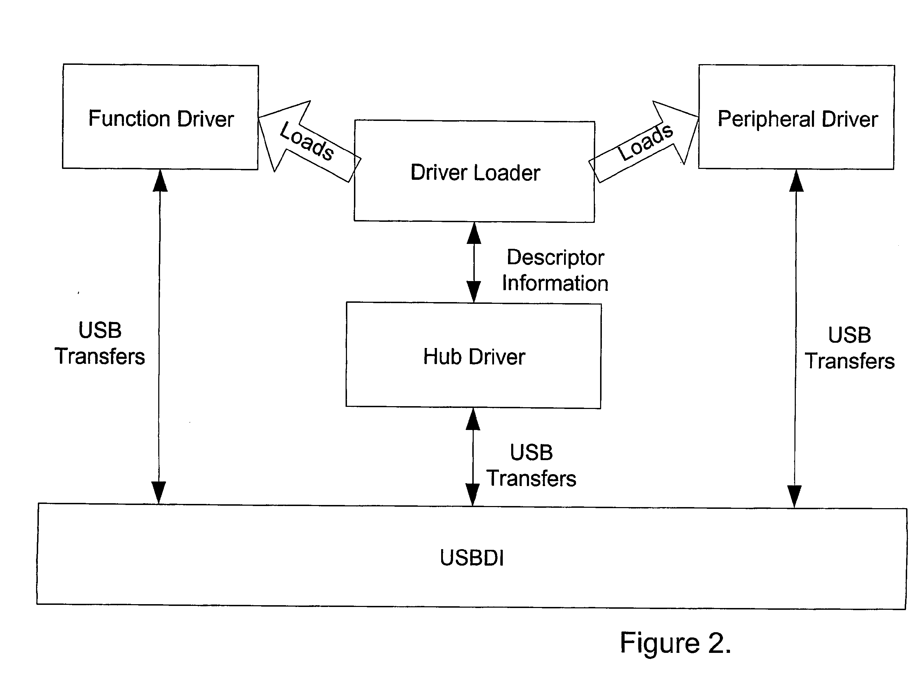

Conceptually, the primary client of the USBDI is the *Hub Driver*, which is central to the functioning of USB topologies and is responsible for ensuring the orderly enumeration and removal of USB peripherals from the bus. This responsibility encompasses both observing changes in the USB topology, and configuring and de-configuring system software to deal with those changes. This relationship is shown schematically in Figure 2.

The Hub Driver provides USB management and transfer primitives that can be used to observe and manipulate USB peripherals attached to the bus. As part of its enumeration duties, the Hub Driver requests and parses descriptors from any newly attached USB peripheral. It does this in order to locate, load and activate software entities to make use of the capabilities of the newly attached USB peripheral. The locating and loading of these software entities need not be undertaken by the Hub Driver directly; it can be delegated to some other entity, which is shown in figure 2 as a Driver Loader.

The software entities loaded by the Driver Loader are not normally referred to simply as drivers, because this is already an overloaded term. They are commonly referred to as either peripheral drivers or function drivers, as shown in figure 2, to distinguish them from other types of driver, such as those which function as operating system (OS) kernel extensions. It should also be noted that the peripheral drivers and function drivers are two distinct classes of entity, performing similar roles but for different portions of the USB topology.

Unlike the Hub Driver, which is allowed unrestricted access to all parts of the USB topology, peripheral and function drivers are very much secondary clients of the USBDI because they are granted access to selected subsections of the bus by the Hub Driver, either an entire USB peripheral or a set of related interfaces (or "function") within a particular USB peripheral.

The entire reason for having a USB Host capability in a system is to enable that system to make use of USB peripherals. However, it is clear from the range of USB input, output and storage peripherals mentioned above that within a USB Host system, there are a wide range of very diverse operating system services and software entities that will need to interact with the USB directly and not as secondary clients as shown in figure 2.

This diversity of software entities that need to interact directly with the USB Host is a major consideration in designing a USBDI; it gives rise to a need to distribute control of the various parts of a given USB topology (relating to a particular function or device) around the operating system.

However, the USB specifications do not specify in any way how this should be achieved. The expected approach would be to provide a single powerful and ubiquitous USBDI, with an associated application programming interface (API). This would be able to address any endpoint in any interface of any device, and inform the various USBDI clients as to which devices, interfaces and endpoints they should restrict themselves to.

Unfortunately, this approach has a major drawback; it lays open the entire USB subsystem to malicious or defective USBDI clients, which would therefore be able to affect any part of the USB topology and render both the subsystem and (quite probably) other parts of the computing device unusable.

This would be less of a concern if the development of mobile battery-operated computing devices for which USB-OTG is designed had been occurring along the same lines as the development of the market for PC systems. In the latter case, USB was developed primarily for a single computing hardware/software architecture (Microsoft OS and Intel CPU), which made the burden of developing and testing drivers for USB peripherals much lighter, as there was no real commercial necessity for making drivers available for multiple architectures. However, the opposite is true of mobile devices because there is no common denominator for software and hardware platforms, either for the various classes of device (including telephones, cameras, and music players) or across the various manufacturers in single devices classes.

The very large number of drivers that need to be written to support USB peripherals across such a wide range of mobile device types and manufacturers makes it extremely unlikely that their USB drivers will be anything like as resilient as PC device drivers. The fundamental insecurity of the monolithic architecture described above highlights clear deficiency in the USB-OTG specifications and recommendations, and it is not immediately apparent how a more secure distribution of control of various portions of the USB topology around the OS might be satisfactorily achieved.

It is therefore an object of the present invention to enable the provision of more secure computing devices incorporating USB-OTG functionality.

According to a first aspect of the present invention there is provided a method according to claim 1.

According to a second aspect of the present invention there is provided a computing device according to 10.

According to a third aspect of the present invention there is provided an operating system for causing a computing device according to the second aspect to operate in accordance with a method of the first aspect.

Embodiments of the present invention will now be described, by way of further example only, with reference to the accompanying drawings, in which:-
Figure 1 shows schematically the layers and functional blocks within a typical USB host implementation;
Figure 2 shows schematically the role of the USB hub driver shown in figure 1;
Figure 3 shows the functional division of the USB driver interface according to an embodiment of the present invention;
Figure 4 shows an implementation of handover of control of a USB peripheral from the hub driver to a peripheral driver running in a separate process on a computing device and using the division of the USB driver interface shown in figure 3; and
Figure 5 shows an example of the division between a driver controller and driver implementation for a USB according to the present invention.

A key object of this invention is to ensure that control over portions of the USB topology is distributed between diverse software entities running in the operating system in a secure way, so that the correct entities are provided with control over the correct parts of the USB in a controlled fashion.

To achieve this, a handover mechanism has been devised that allows defined parts of a USB topology to be cascaded down from a central control entity (that is, the Hub Driver as shown in figures 1 and 2) to individual device and function drivers.

The principle of this handover mechanism is that a software entity which currently has control over a portion of the USB topology can nominate a sub-division of that portion to be handed over to another process. This is achieved by initiating a request to the hub driver. In response, the hub driver provides an electronic token which can be used to identify the nominated sub-division. Another software entity (which may possibly be operating in another process on the device) can then present that electronic token to the hub driver to request control of that sub-division of the USB topology.

The use of electronic tokens to authorise use of resources is used in token ring networking, originally designed by IBM and described in the IEEE 802.5 specification, available from http://standards.ieee.org/getieee802/802.5.html. In token ring networking, computers avoid collisions on a shared network medium by enforcing the restriction that only that computer which currently possesses a single electronic token is permitted to transmit data over the network.

With the present invention, in contrast to the use of a single token in token ring networking, the principle of nomination, allocating tokens and claiming of control is used by the peripheral driver implementation to further distribute control of individual interfaces throughout the system. This allows multiple functions on a single device, enabling composite USB devices to be supported.

Hence, any entity wishing to relinquish control of a portion of the USB topology can do so by repeating the nomination process and passing the resulting token to another entity. This new entity may be the one by which the requesting entity was originally nominated or the USB root Hub Driver.

In essence, therefore, the Hub Driver nominates a portion of the USB topology to be transferred to the control of a peripheral driver or a function driver. Each nomination process gives rise to a respective token that is associated with the nominated portion. The token is then passed by the Hub Driver to the peripheral driver or function driver. The peripheral driver or function driver can then use this token to claim control over the nominated portion of the USB topology.

Peripheral drivers and function drivers should therefore offer a standardised interface to the Hub Driver through which a token representing a peripheral (for a peripheral driver) or a number of tokens representing a number of interfaces (for a function driver) may be passed in order for that driver to be activated.

To enable a driver implementation to claim the portion of the USB topology being delegated to it, the Hub Driver must be able to convey these tokens to the driver implementation via the driver loader of the USB host shown in figure 2.

It should be noted at this point that, also in contrast to token ring networking, there are two distinct token types envisaged with the present invention; peripheral tokens and function tokens. A peripheral token allows a peripheral driver implementation to claim control over a specific USB peripheral. A function token allows a function driver implementation to claim control over a specific interface on a particular USB peripheral.

A peripheral driver, on being activated, must be provided with a single valid peripheral token: valid in this context means that the Hub Driver must have already nominated that part of the USB topology for transfer.

A function driver, on being activated, must be provided with one or more valid function tokens. A USB function very often comprises more than one interface, and this is why a single token is not always used. For example, in the CDC (Connected Device Configuration) family of class definitions as defined by Java, there are always two interfaces, one for control communication and one for data transfer.

The mechanism by which these tokens are transferred from driver controller to driver implementation is largely implementation and device dependent, and may be different from driver controller to driver controller on a single device, as well as from one computing device to another. These mechanisms will not, therefore, be described in the context of the present invention. It is assumed that their particular configuration will be apparent to a person skilled in this art and wishing to implement such a mechanism. However, the choice of simple data structures to represent nominated portions of the USB topology is a preferred way of providing a means of distributing tokens from driver controller to driver implementation.

It is important that control of the USB remains with properly authorised software entities. It is therefore also preferable that additional security checks, such as the capability model disclosed in GB2389747A, are incorporated in the function by which a driver implementation claims control using a token. For example, as part of the nomination, the Hub Driver may provide the base driver with an instance of a TSecurityPolicy class, which represents a policy check that can be applied by the base driver to the claiming process; if the claiming process fails to pass the policy check, then the claim to assume control by way of a token will fail.

The use of the capability model as described above is considered, therefore, to make distribution of tokens virtually risk free, because only properly authorised processes are able to make use of them. Therefore, a relatively open distribution mechanism, such as 'publish and subscribe', may advantageously be used to distribute tokens around the system.

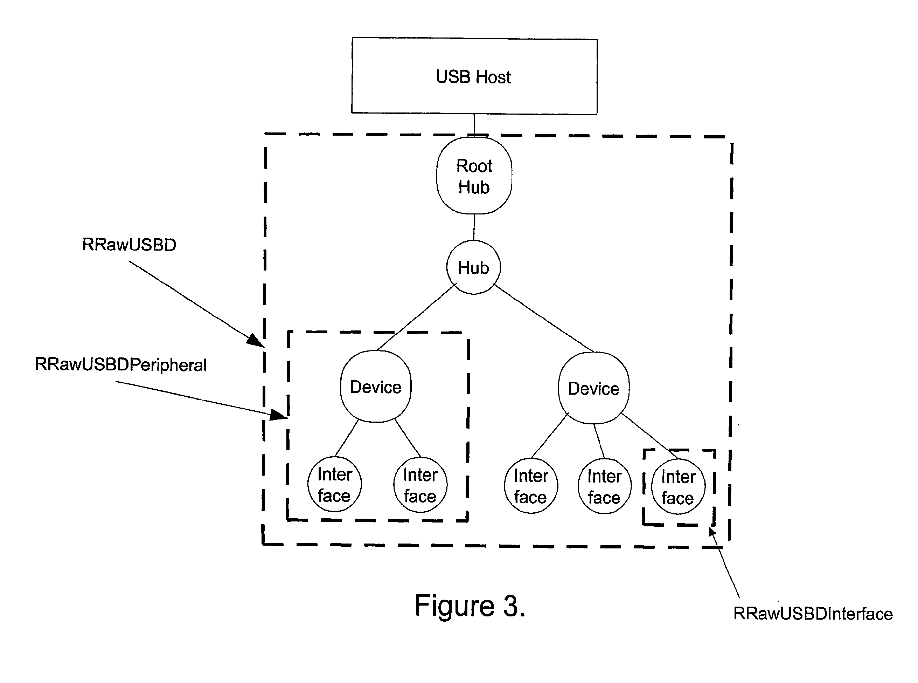

In a preferred embodiment of this invention, as shown in figure 3, the raw USBDI interface is divided into three portions, each one providing similar functionality but with in-built restrictions on which part of the USB bus topology each can address. In the example implementation shown in figure 3, which has been designed for the Symbian OS^{™} operating system for mobile telephones produced by Symbian Software Ltd., these three interface divisions are referred to as *RRawUSBD*, *RRawUSBDPeripheral*, and *RRawUSBDInterface.*

The scope of these three interface divisions will now be described.

RRawUSBD is used solely by the Hub Driver. It is the most powerful of all the interface portions because it offers access to the entire bus. For instance, it includes functions to perform device requests upon any USB device. One of the major responsibilities of the Hub Driver is that of software configuration, which means handing over control of sections of the USB bus topology to other software entities on the USB host. To allow this to take place, RRawUSBD provides an API call to nominate which software entity should take control of a particular peripheral. Incidentally, this software entity might be the Hub Driver itself.

Another major responsibility of the Hub Driver is to manage the attachment and detachment of USB devices to the bus. To allow management of device disconnection, the Hub Driver has privileged access to the base driver (via RRawUSBD) such that it can invalidate all base driver sessions related to a particular peripheral. It retains this capability regardless of control of that particular peripheral or its interfaces having been delegated to some other entity or entities. This is necessary when a particular device is physically or electrically disconnected from the USB topology, especially if that device is a hub with other downstream peripherals attached to it. Invalidation of a base driver session means that all requests currently outstanding on that session are completed with an error, as are any further requests made on that session.

RRawUSBDPeripheral interface is used indirectly, through a wrapper class, by the Hub Driver during enumeration of a new device, and (again indirectly) by other software entities which are nominated to take control of such a USB peripheral. It has similar functionality to the RRawUSBD (including the ability to perform device requests), but its use is restricted to a specific USB device.

The RRawUSBDPeripheral interface provides functionality for nominating which software entity should take control of the peripheral that a particular instance of RRawUSBDPeripheral represents. It also provides functionality for nominating which software entity should take control of a specific interface belonging to the same peripheral.

RRawUSBDInterface is sometimes used (indirectly, through a wrapper class) by the Hub Driver during enumeration of a new device, and (again indirectly) by other software entities who are nominated to take control of a USB interface. It has a superset of the functionality of the RRawUSBD, but whose use is restricted to a specific USB interface on a specific USB device (identified by a combination of interface number and USB device address).

The extra functionality that this interface offers over and above that of the RRawUSBD and RRawUSBDPeripheral interfaces is related to queuing requests for reads and writes (such requests are known in USB parlance as I/O Request Packets or "IRP"s), setting pipe policy (which initialises a particular pipe in preparation for making transfers), and various interface and endpoint related state control mechanisms (such as halting an EP, or clearing a halt).

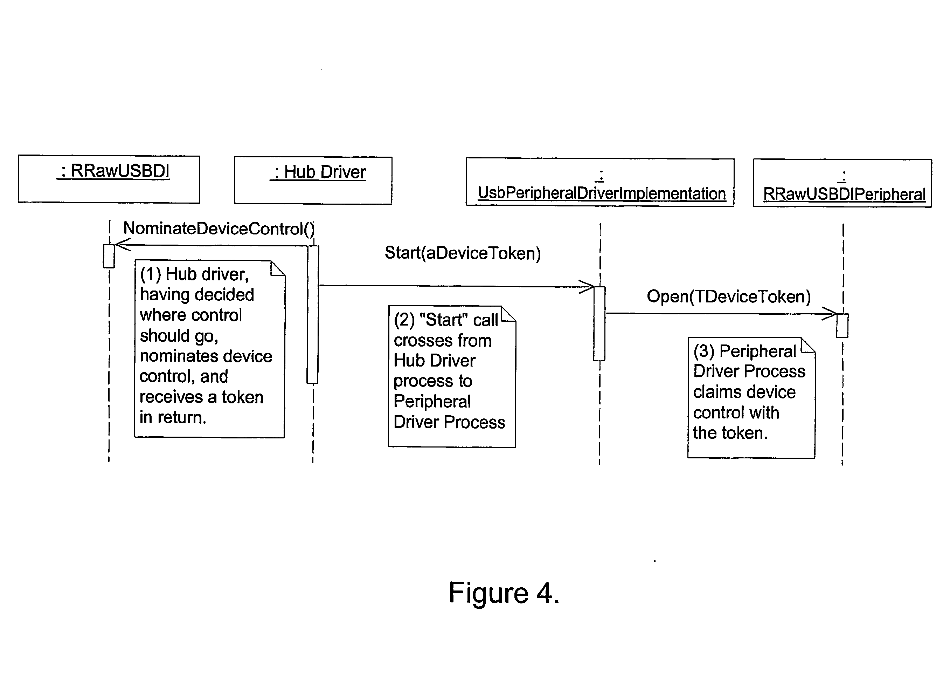

Using the USBI design shown in figure 3 together with some suggested function names, figure 4 shows a much simplified handover of control of a USB peripheral from the Hub Driver to a peripheral driver implementation running in a separate process. Firstly, the Hub Driver of the USB host, having decided where control for a particular peripheral device should be allocated, nominates device control to the RRawlUSBDI division by way of the function call NominateDeviceControl(). In return, the Hub Driver receives a token. The Hub Driver then initiates a "Start" call which crosses the process boundary between the Hub Driver process to the Peripheral Driver process. The Peripheral driver process is then able to claim direct control for the peripheral device through use of the token.

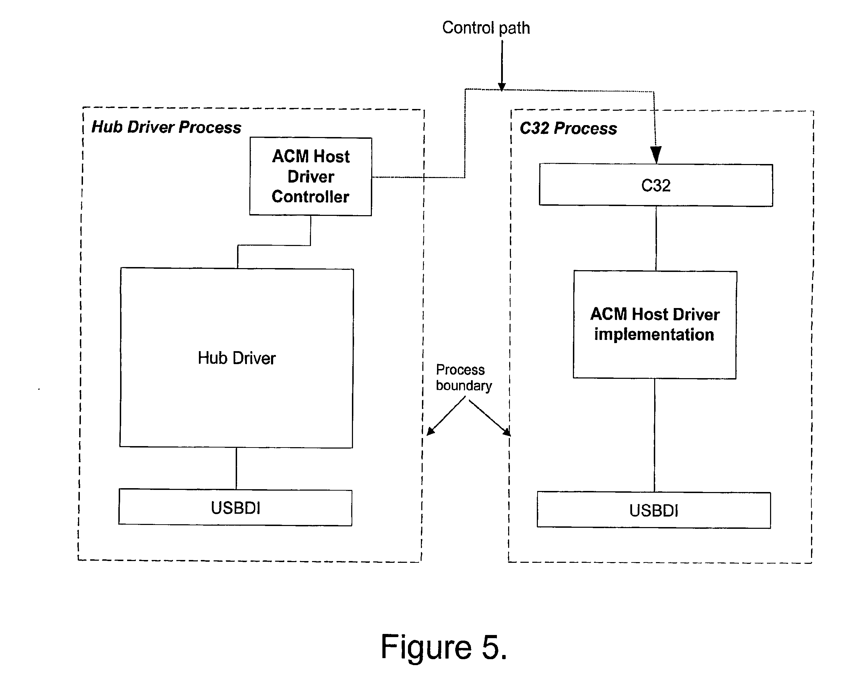

Preferably, peripheral or function drivers need to operate in diverse areas within the OS of a computing device in order to provide enhanced functionality. At the same time, the peripheral or function drivers need to present a standard interface to the Hub Driver of the USB, through which they can be identified, loaded and activated. However, it is difficult to reconcile these requirements if a driver is considered to be a single software entity so, in order to reconcile these two requirements, the driver is divided into two parts. Figure 5 shows an example split of such a driver into two parts, referred to as the driver controller and the driver implementation.

The driver controller is that part of the driver which is loaded and used directly by the Hub Driver. This part of the driver needs to integrate with the device driver plugin mechanism so that it can be included in the driver search. If it is chosen as the most appropriate driver, it can be loaded and activated, deactivated and unloaded.

The driver implementation is that part of the driver which runs within some existing OS framework and takes control of the portion of the USB topology to make the capabilities of a USB peripheral available to the OS at large.

Figure 5 shows how the Abstract Control Model (ACM) driver, which is a device class protocol used for both data and fax purposes and forms part of the USB-OTG specification, may be implemented as two such parts, with the ACM Host Driver Controller of the driver running within the Hub Driver process and the ACM Host Driver Implementation running within the C32 Process, which is a communications driver within the Symbian OS operating system.

It can be seen from figure 5 that the ACM Host Driver Controller is used directly by the Hub Driver. But, the ACM Host Driver Implementation is activated by the ACM Host Driver Controller. Hence, the two parts of the ACM driver are coupled by way of a control path extending between the two processes because the driver controller part needs some means to activate and deactivate the driver implementation part, including conveying the token required by the implementation from the driver controller to the driver implementation. The driver controller is, therefore, also provided with sufficient knowledge of the OS framework because it needs to know where the driver implementation sits so that the control path can be established.

It can be seen from the above description that the present invention provides an advantageous way of implementing USB OTG technology because it permits controlled distribution of functionality around the system. In particular, it is stressed that USB OTG has not been implemented previously in an open operating system, but the present invention enables such implementation to be reliably and securely achieved. The token passing mechanism described above provides a controlled and secure means to distribute control of defined portions of the USB topology between processes within the operating system. Only authorised processes are allowed to claim control, and even then, only over defined portions of the USB topology (perhaps a single USB peripheral or a single USB function).

While this may not be an issue for closed embedded operating systems, in an open embedded operating system where it is possible to install new drivers, it is extremely important that the impact of defective or malicious code is minimised. By partitioning control to the USB topology, and controlling the distribution of this control, it is possible to restrict the detrimental effects of defective or malicious code to the operation of a single USB peripheral or even a single USB function.

Although the present invention has been described with reference to particular embodiments, it will be appreciated that modifications may be effected whilst remaining within the scope of the present invention as defined by the appended claims.

## Claims

1. A method of connecting one or more USB devices to a computing device comprising a USB Root Hub and connected to a USB topology, **characterised in that** when a software entity is required to take control over any portion of the USB topology, the software entity is presented an electronic token originating from the USB Root Hub and associated with the said any portion, and is only granted control over the said any portion by presenting the electronic token to the USB Root Hub.

2. A method according to claim 1 wherein ownership of an electronic token is transferred from a first software entity to a second software entity by means of the first software entity providing the said electronic token to the second software entity and by the second software entity presenting the said electronic token to the USB Root Hub.

3. A method according to claim 2 wherein the one or more software entities comprise processes, threads or classes.

4. A method according to any one of the preceding claims wherein a first electronic token type is used for USB peripheral drivers and a second electronic token type is used for USB function drivers.

5. A method according to any one of the preceding claims wherein a software entity may relinquish control of a portion of the USB topology by handing over the electronic token either to a software entity by which it was originally nominated or to the USB Root Hub.

6. A method according to any one of the preceding claims further comprising using a capability model for checking that a software entity presenting an electronic token should be granted control over a portion of the USB topology.

7. A method according to claim 6 wherein the electronic token is distributed through the use of an open distribution mechanism

8. A method according to claim 7 wherein the open distribution mechanism comprises a publish and subscribe mechanism

9. A method according to any one of the preceding claims wherein the USB topology is implemented in accordance with the USB-OTG specification.

10. A computing device comprising a USB Root Hub and connected to a USB topology, **characterised in that** when a software entity is required to take control over any portion of the USB topology, the software entity is presented with an electronic token originating from the USB Root Hub and associated with the said any portion, and is only granted control over the said any portion by presenting the electronic token to the USB Root Hub.

11. A device according to claim 10 wherein ownership of an electronic token is transferred from a first software entity to a second software entity by means of the first software entity providing the electronic token to the second software entity and by the second software entity presenting the token to the USB Root Hub.

12. A device according to claim 11 wherein the one or more software entities comprise processes, threads or classes.

13. A device according to any one of claims 10 to 12 wherein a first electronic token type is used for USB peripheral drivers and a second electronic token type is used for USB function drivers.

14. A device according to any one claims 10 to 13 wherein a software entity may relinquish control of a portion of the USB topology by handing over the electronic token either to the entity by which it was originally nominated or to the USB Root Hub.

15. A device according to any one of claims 10 to 14 wherein a capability model is used for checking that a software entity presenting an electronic token should be granted control over a portion of the USB topology.

16. A device according to claim 15 wherein the electronic token is distributed through the use of an open distribution mechanism

17. A device according to claim 16 wherein the open distribution mechanism comprises a publish and subscribe mechanism

18. A device according to any one claims 10 to 17 wherein the USB topology is implemented in accordance with the USB-OTG specification.

19. A device according to any one of claims 10 to 18 comprising a mobile phone.

20. An operating system configured to cause a computing device to operate in accordance with a method as claimed in any one of claims 1 to 9.

## Patentansprüche

1. Verfahren eines Verbindens von einer oder mehreren USB-Vorrichtungen mit einer Datenverarbeitungsvorrichtung, die einen USB-Root-Hub umfasst und mit einer USB-Topologie verbunden ist, **dadurch gekennzeichnet, dass**, wenn eine Softwareeinheit die Steuerung irgendeines Teils der USB-Topologie übernehmen muss, der Softwareeinheit ein elektronisches Token präsentiert wird, das von dem USB-Root-Hub stammt und mit dem Teil verknüpft ist, und wobei die Steuerung des Teils nur gestattet wird, indem das elektronische Token dem USB-Root-Hub präsentiert wird.

2. Verfahren nach Anspruch 1, wobei der Besitz eines elektronischen Token von einer ersten Softwareeinheit an eine zweite Softwareeinheit übertragen wird, indem die erste Softwareeinheit das elektronische Token der zweiten Softwareeinheit bereitstellt, und indem die zweite Softwareeinheit das elektronische Token dem USB-Root-Hub präsentiert.

3. Verfahren nach Anspruch 2, wobei die eine oder die mehreren Softwareeinheiten Prozesse, Threads oder Klassen umfassen.

4. Verfahren nach einem der vorhergehenden Ansprüche, wobei ein elektronisches Token eines ersten Typs für USB-Peripherietreiber und ein elektronisches Token eines zweiten Typs für USB-Funktionstreiber verwendet wird.

5. Verfahren nach einem der vorhergehenden Ansprüche, wobei eine Softwareeinheit die Steuerung eines Teils der USB-Topologie abgeben kann, indem sie das elektronische Token entweder an eine Softwareeinheit, durch die sie ursprünglich nominiert wurde, oder an den USB-Root-Hub übergibt.

6. Verfahren nach einem der vorhergehenden Ansprüche, weiter umfassend ein Verwenden eines Fähigkeitsmodells zum Überprüfen, ob einer Softwareeinheit, die ein elektronisches Token präsentiert, die Steuerung eines Teils der USB-Topologie gewährt werden soll.

7. Verfahren nach Anspruch 6, wobei das elektronische Token durch die Verwendung eines offenen Verteilungsmechanismus verteilt wird.

8. Verfahren nach Anspruch 7, wobei der offene Verteilungsmechanismus einen Publish-and-Subscribe Mechanismus umfasst.

9. Verfahren nach einem der vorhergehenden Ansprüche, wobei die USB-Topologie gemäß der USB-OTG-Spezifikation implementiert ist.

10. Datenverarbeitungsvorrichtung, umfassend einen USB-Root-Hub und verbunden mit einer USB-Topologie, **dadurch gekennzeichnet, dass**, wenn eine Softwareeinheit die Steuerung irgendeines Teils der USB-Topologie übernehmen muss, der Softwareeinheit ein elektronisches Token präsentiert wird, das von dem USB-Root-Hub stammt und mit dem Teil verknüpft ist, und wobei die Steuerung des Teils nur gestattet wird, indem das elektronische Token dem USB-Root-Hub präsentiert wird.

11. Vorrichtung nach Anspruch 10, wobei der Besitz eines elektronischen Token von einer ersten Softwareeinheit an eine zweite Softwareeinheit übertragen wird, indem die erste Softwareeinheit das elektronische Token der zweiten Softwareeinheit bereitstellt, und indem die zweite Softwareeinheit das elektronische Token dem USB-Root-Hub präsentiert.

12. Vorrichtung nach Anspruch 11, wobei die eine oder die mehreren Softwareeinheiten Prozesse, Threads oder Klassen umfassen.

13. Vorrichtung nach einem der Ansprüche 10 bis 12, wobei ein elektronisches Token eines ersten Typs für USB-Peripherietreiber und ein elektronisches Token eines zweiten Typs für USB-Funktionstreiber verwendet wird.

14. Vorrichtung nach einem der Ansprüche 10 bis 13, wobei eine Softwareeinheit die Steuerung eines Teils der USB-Topologie abgeben kann, indem sie das elektronische Token entweder an die Softwareeinheit, durch die sie ursprünglich nominiert wurde, oder an den USB-Root-Hub übergibt.

15. Vorrichtung nach einem der Ansprüche 10 bis 14, wobei ein Fähigkeitsmodell zum Überprüfen verwendet wird, ob einer Softwareeinheit, die ein elektronisches Token präsentiert, die Steuerung eines Teils der USB-Topologie gewährt werden soll.

16. Vorrichtung nach Anspruch 15, wobei das elektronische Token durch die Verwendung eines offenen Verteilungsmechanismus verteilt wird.

17. Vorrichtung nach Anspruch 16, wobei der offene Verteilungsmechanismus einen Publish-and-Subscribe Mechanismus umfasst.

18. Vorrichtung nach einem der Ansprüche 10 bis 17, wobei die USB-Topologie gemäß der USB-OTG-Spezifikation implementiert ist.

19. Vorrichtung nach einem der Ansprüche 10 bis 18, umfassend ein Mobiltelefon.

20. Betriebssystem, eingerichtet, um eine Computervorrichtung dazu zu veranlassen, gemäß einem Verfahren nach einem der Ansprüche 1 bis 9 zu arbeiten.

## Revendications

1. Procédé de connexion d'un ou plusieurs dispositifs USB à un dispositif informatique comprenant un concentrateur USB racine et connecté à une topologie USB, **caractérisé en ce que** lorsqu'une entité logicielle doit prendre le contrôle d'une partie quelconque de la topologie USB, l'entité logicielle se voit présenter un jeton électronique provenant du concentrateur USB racine et associé à ladite partie quelconque, et se voit attribuer le contrôle de ladite partie quelconque uniquement en présentant le jeton électronique au concentrateur USB racine.

2. Procédé selon la revendication 1, dans lequel la propriété d'un jeton électronique est transférée d'une première entité logicielle à une seconde entité logicielle au moyen de la fourniture par la première entité logicielle dudit jeton électronique à la seconde entité logicielle et au moyen de la présentation par la seconde entité logicielle dudit jeton électronique au concentrateur USB racine.

3. Procédé selon la revendication 2, dans lequel la ou les entité(s) logicielle(s) comprend (comprennent) des traitements, des fils ou des classes.

4. Procédé selon l'une quelconque des revendications précédentes dans lequel un premier type de jeton électronique est utilisé pour les pilotes de périphérique USB et un second type de jeton électronique est utilisé pour les pilotes de fonction USB.

5. Procédé selon l'une quelconque des revendications précédentes, dans lequel une entité logicielle peut renoncer au contrôle d'une partie de la topologie USB en remettant le jeton électronique soit à une entité logicielle par laquelle elle a été initialement désignée soit au concentrateur USB racine.

6. Procédé selon l'une quelconque des revendications précédentes, comprenant en outre l'utilisation d'un modèle de capacité pour vérifier qu'une entité logicielle présentant un jeton électronique doit se voir attribuer le contrôle d'une partie de la topologie USB.

7. Procédé selon la revendication 6, dans lequel le jeton électronique est distribué par l'utilisation d'un mécanisme de distribution ouvert.

8. Procédé selon la revendication 7, dans lequel le mécanisme de distribution ouvert comprend mécanisme de publication et de souscription.

9. Procédé selon l'une quelconque des revendications précédentes, dans lequel la topologie USB est mise en oeuvre conformément à la spécification USB-OTG.

10. Dispositif informatique comprenant un concentrateur USB racine et connecté à une topologie USB, **caractérisé en ce que** lorsqu'une entité logicielle doit prendre le contrôle d'une partie quelconque de la topologie USB, l'entité logicielle se voit présenter un jeton électronique provenant du concentrateur USB racine et associé à ladite partie quelconque, et se voit uniquement attribuer le contrôle de ladite partie quelconque en présentant le jeton électronique au concentrateur USB racine.

11. Dispositif selon la revendication 10, dans lequel la propriété d'un jeton électronique est transférée d'une première entité logicielle à une seconde entité logicielle au moyen de la fourniture par la première entité logicielle du jeton électronique à la seconde entité logicielle et au moyen de la présentation par la seconde entité logicielle du jeton au concentrateur USB racine.

12. Dispositif selon la revendication 11 dans lequel la ou les entité(s) logicielle(s) comprend (comprennent) des traitements, des fils ou des classes.

13. Dispositif selon l'une quelconque des revendications 10 à 12, dans lequel un premier type de jeton électronique est utilisé pour les pilotes de périphérique USB et un second type de jeton électronique est utilisé pour les pilotes de fonction USB.

14. Dispositif selon l'une quelconque des revendications 10 à 13, dans lequel une entité logicielle peut abandonner le contrôle d'une partie de la topologie USB en remettant le jeton électronique soit à l'entité par laquelle elle a été initialement désignée soit au concentrateur USB racine.

15. Dispositif selon l'une quelconque des revendications 10 à 14, dans lequel un modèle de capacité est utilisé pour vérifier qu'une entité logicielle présentant un jeton électronique doit se voir attribuer le contrôle d'une partie de la topologie USB.

16. Dispositif selon la revendication 15, dans lequel le jeton électronique est distribué par l'utilisation d'un mécanisme de distribution ouvert.

17. Dispositif selon la revendication 16, dans lequel le mécanisme de distribution ouvert comprend un mécanisme de publication et de souscription.

18. Dispositif selon l'une quelconque des revendications 10 à 17, dans lequel la topologie USB est mise en oeuvre conformément à la spécification USB-OTG.

19. Dispositif selon l'une quelconque des revendications 10 à 18, comprenant un téléphone mobile.

20. Système d'exploitation configuré pour entraîner le fonctionnement d'un dispositif informatique conformément à un procédé selon l'une quelconque des revendications 1 à 9.
